# EUROPÄISCHE PATENTSCHRIFT

(11) **EP 2 337 155 B1**
(45) Veröffentlichungstag und Bekanntmachung des Hinweises auf die Patenterteilung: **18.04.2012**
(21) Anmeldenummer: 09015787.6
(22) Anmeldetag: 21.12.2009
(51) Int. Cl.: H01R 11/28

(54) **Kontaktvorrichtung für die Anschlussfahnen der Akkuzellen in einem Akkublock**
Contact device for the terminals of the battery cells in a battery block
Dispositif de contact pour les languettes-bornes des cellules de batterie dans un bloc de batterie

(43) Veröffentlichungstag der Anmeldung: 22.06.2011
(73) Patentinhaber: ads-tec GmbH, 70771 Leinfelden-Echterdingen (DE)
(72) Erfinder:
(74) Vertreter: Wasmuth, Rolf

(56) Entgegenhaltungen:
- EP-A2- 1 445 815
- WO-A1-96/41392
- DE-A1-102007 004 567
- US-A- 4 646 430
- US-A- 5 543 241

## Beschreibung

Die Erfindung betrifft eine Kontaktvorrichtung zum elektrischen Verbinden der Anschlussfahnen nebeneinander liegender Akkuzellen in einem Akkublock.

Akkuflachzellen sind in verschiedenen Ausführungen bekannt. Sie bestehen meist aus wechselweise geschichteten Anodenfolien, Separatorfolien und Kathodenfolien, wobei die Anoden mehrerer Lagen und die Kathoden mehrerer Lagen zu Anschlussfahnen verbunden werden. Diese Anschlussfahnen werden aus dem Foliengehäuse herausgeführt, wobei die Dichtigkeit im Bereich der Anschlussfahnen zu gewährleisten ist.

Müssen größere Leistungen bereitgestellt werden, so z. B. für Elektrofahrzeuge oder dgl., werden eine Vielzahl von Akkuflachzellen in einem Akkublock zusammengefasst. Zur Erzielung einer ausreichend hohen Ausgangsspannung werden die Akkuflachzellen in Reihe geschaltet, wobei wechselweise die Anoden- und-Kathodenanschlussfahnen benachbarter Akkuflachzellen miteinander zu verbinden sind. Dabei ist darauf zu achten, dass einerseits eine gute elektrische Kontaktierung hergestellt wird, aber andererseits bei der Kontaktierung die Anschlussfahnen mechanisch nicht belastet werden, um Schädigungen der Akkuflachzellen und damit einen Leistungsverlust des gesamten Zellverbundes im Akkublock zu vermeiden.

Aus der DE 10 2007 004 567 A1 ist eine Kontaktvorrichtung zum elektrischen Verbinden der nebeneinander liegenden Akkuzellen in einem Akkublock bekannt, die aus Gehäusehalbschalen zusammengesetzt werden.

Der Erfindung liegt die Aufgabe zugrunde, eine Kontaktvorrichtung zum elektrischen Verbinden der Anschlussfahne nebeneinander liegender Akkuzellen in einem Akkublock anzugeben, die leicht montierbar ist, eine gute elektrische Kontaktierung gewährleistet und eine mechanische Belastung der Anschlussfahne einer Zelle vermeidet.

Die Aufgabe wird erfindungsgemäß nach den kennzeichnenden Merkmalen des Anspruchs 1 gelöst.

Zwischen den einander zugewandten Seitenflächen der zu verbindenden Anschlussfahnen benachbarter Akkuflachzellen wird ein druckstabiler Distanzhalter eingesetzt. Auf den einander abgewandten Seitenflächen der Anschlussfahnen greift eine Verbindungsklammer an, die den Distanzhalter und die Anschlussfahnen übergreift und auf den einander abgewandten Seitenflächen der Anschlussfahnen anliegt. Die elektrische Verbindung zwischen den Anschlussfahnen wird dabei über den Distanzhalter und/oder die Verbindungsklammer hergestellt.

Die Ausbildung hat den Vorteil, dass die Montage des Distanzhalters ebenso wie der Verbindungsklammer aus einer Montagerichtung erfolgen kann, weshalb eine Automatisierung der Kontaktierung leicht auszuführen ist. Das Aufschieben der - bevorzugt gespreizt gehaltenen - Federklammer leitet keine Kräfte in die Anschlussfahnen ein; erst wenn das Aufspreizen der Federklammer aufgehoben wird, legt sich diese - z. B. flächig - auf den Außenseiten der Anschlussfahnen an. Die Krafteinleitung der Federklammer in die Anschlussfahnen kann zu keinen Auslenkungen der Anschlussfahnen selbst führen, da diese gegeneinander über den Distanzhalter abgestützt sind. Die Kontaktvorrichtung stellt sicher, dass weder bei der Montage noch im montierten Zustand Kräfte von den Anschlussfahnen auf die Akkuflachzelle wirken.

Die elektrische Verbindung zwischen den beiden Anschlussfahnen kann einerseits über den Distanzhalter selbst und/oder auch über die Verbindungsklammer hergestellt sein. Bevorzugt erfolgt die elektrische Verbindung sowohl über den Distanzhalter als auch über die Verbindungsklammer.

Hierzu ist der Distanzhalter aus einem Kunststoff gefertigt und trägt ein Kontaktblech, an dem die einander zugewandten Seitenflächen der Anschlussfahnen anliegen.

Der Distanzhalter ist zweckmäßig Teil eines gemeinsamen Gitterrahmens, der eine Vielzahl von Distanzhaltern umfasst, die zwischen die Freiräume der Anschlussfahnen einer Zellanordnung aus mehreren Akkuzellen eingreifen.

Ein Distanzhalter kann einen Fixierdom aufweisen, der das Kontaktblech und/oder die Verbindungsklammer durchragt. Dieser Fixierdom kann bei einer automatisierten Fertigung als zusätzliche Führung für die aufzufädelnden Einzelelemente wie Kontaktblech und Federklammer dienen. Des Weiteren ist der Fixierdom vorgesehen, um eine Sicherungsschraube zu tragen, die die Gesamtanordnung sichert.

Zwischen den Anschlussfahnen einer Zelle ist eine Platine für eine Zellüberwachungsschaltung angeordnet, wobei sich die Platine vorteilhaft über die Länge der Zellanordnung erstreckt. Das Kontaktblech und/oder die Verbindungsklemme untergreifen die Platine mit einer Zunge, über die eine elektrische Kontaktierung mit der Platine hergestellt wird. Dadurch kann ohne große Verdrahtung das Potenzial jeder Kontaktvorrichtung abgegriffen werden und der Zellüberwachungsschaltung zur Verfügung gestellt sein.

Die Kontaktierung der Kontaktvorrichtung mit der Platine kann auch durch eine federnde Anlage eines Kontaktelementes ausgebildet werden.

Zur Temperaturüberwachung der einzelnen Kontaktvorrichtungen ist zweckmäßig ein Thermoelement vorgesehen, das auf der Platine montiert ist und zwischen dem Kontaktblech und/oder der Verbindungsklammer und der Platine geklemmt ist. Die Thermoelemente aller Kontaktvorrichtungen sind zweckmäßig auf der Platine gehalten, die ihrerseits am Gitterrahmen der Distanzhalter festgelegt ist.

In Weiterbildung der Erfindung ist die Verbindungsklammer zweiteilig ausgebildet und besteht aus einer kleineren, inneren Federklammer und einer größeren, äußeren Federklammer. Die innere Federklammer und die äußere Federklammer liegen dabei jeweils mit einer breiteren Auflagelinie auf der Außenseite der Anschlussfahnen auf, so dass insgesamt vier schmale Auflagebereiche ausgebildet sind.

Der Aufbau der Kontaktvorrichtung ist so vorgesehen, dass alle Systemelemente der Kontaktvorrichtung aus nur einer Montagerichtung aufgedrückt werden können.

In Weiterbildung der Erfindung ist es zweckmäßig, das Kontaktblech und/oder die Verbindungsklemme in ihren Anlagebereichen materialunterschiedlich auszubilden, insbesondere unterschiedlich zu beschichten. So können die Anlagebereiche der Kontaktvorrichtung jeweils dem Material der Anschlussfahne geeignet ausgebildet werden, um auf beiden Seiten die Opferanoden/Opferkathoden-Wirkung zu vermeiden.

Um eine hohe Klemmkraft bereitzustellen ist vorgesehen, die Verbindungsklammer oder die eine Verbindungsklammer bildenden Federklammern im Querschnitt kreisförmig oder elliptisch auszubilden.

Weitere Merkmale der Erfindung ergeben sich aus den weiteren Ansprüchen, der Beschreibung und der Zeichnung, in der Ausführungsbeispiele der Erfindung dargestellt sind. Es zeigen:
- Fig. 1: im Teilschnitt einen Akkublock,
- Fig. 2: einzelne Akkuzellen aus folienverpackten Kathoden, Anoden und Separatorblättern,
- Fig. 3: eine Ansicht auf einen Gitterrahmen aus Distanz- elementen zur Fixierung der Anschlussfahnen der Akkuzellen,
- Fig. 4: einen Schnitt durch den Gitterrahmen,
- Fig. 5: in vergrößerter Darstellung eine Seitenansicht der erfindungsgemäßen Kontaktvorrichtung,
- Fig. 6: ein zwischen zwei Anschlussfahnen benachbarter Akku- flachzellen angeordnetes Distanzelement des Gitter- rahmens,
- Fig. 7: eine Darstellung zum Aufsetzen einer inneren Feder- klammer auf das Distanzelement,
- Fig. 8: das Spreizen der Federklammer durch endseitig des Distanzhalters angeordnete Rampen,
- Fig. 9: den Eingriff der Rampen an der inneren Federklammer,
- Fig. 10: das Spreizen der inneren Federklammer durch zu- geordnete Rampen,
- Fig. 11: das Aufrasten der inneren Federklammer auf die An- schlussfahnen,
- Fig. 12: eine Schnittdarstellung der aufgerasteten inneren Federklammer,
- Fig. 13: das Ansetzen der äußeren Federklammer,
- Fig. 14: das Aufsetzen der äußeren Federklammer mit Eingriff der zugeordneten Rampen,
- Fig. 15: eine Schnittdarstellung der an den Rampen an- greifenden äußeren Federklammer,
- Fig. 16: das Aufspreizen der Federklammer beim Aufschieben auf den Distanzhalter,
- Fig. 17: eine Schnittdarstellung der aufgespreizten Feder- klammer,
- Fig. 18: die Raststellung der aufgesetzten äußeren Feder- klammer,
- Fig. 19: eine Schnittdarstellung der aufgerasteten äußeren Federklammer,
- Fig. 20: eine Schnittdarstellung durch eine Kontakteinrichtung mit im Querschnitt kreis- bis ovalförmiger Verbindungsklammer.

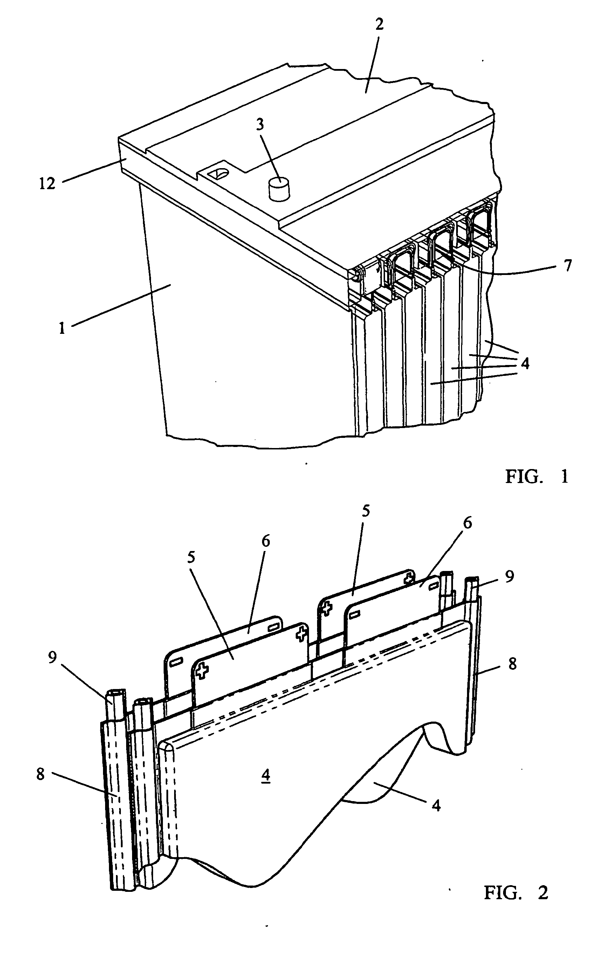

Der in Fig. 1 gezeigte Akkublock besteht aus einem Gehäuse 1, welches durch einen Deckel 2 verschlossen ist. Aus dem Deckel ragen die äußeren elektrischen Anschlüsse 3 des Akkublocks.

Der Akkublock besteht aus einer Vielzahl von Akkuflachzellen 4, wie sie in Aufbau und Form vielfältig bekannt sind. Jede Akkuflachzelle besteht aus einem Stapel von Anodenblättern, Separatorenblättern und Kathodenblättern, die in einem Foliengehäuse aufgenommen sind. Die Anodenblätter bilden eine gemeinsame äußere Anschlussfahne 5 und die Kathodenblätter eine gemeinsame äußere Anschlussfahne 6, die durch den versiegelten Folienrand nach außen geführt sind. Die Akkuflachzellen 4 haben keine große mechanische Eigenstabilität, weshalb zweckmäßig an den Hochkanten 8 Versteifungsstäbe 9 eingebunden sind.

Die in einem Akkublock gehaltenen Akkuflachzellen 4 müssen elektrisch miteinander kontaktiert werden; im gezeigten Ausführungsbeispiel sind alle Zellen 4 eines Akkublocks in Reihenschaltung miteinander elektrisch verbunden, wozu wechselseitig die Anschlussfahne 5 der Anode und die Anschlussfahne 6 der Kathode elektrisch miteinander zu verbinden sind.

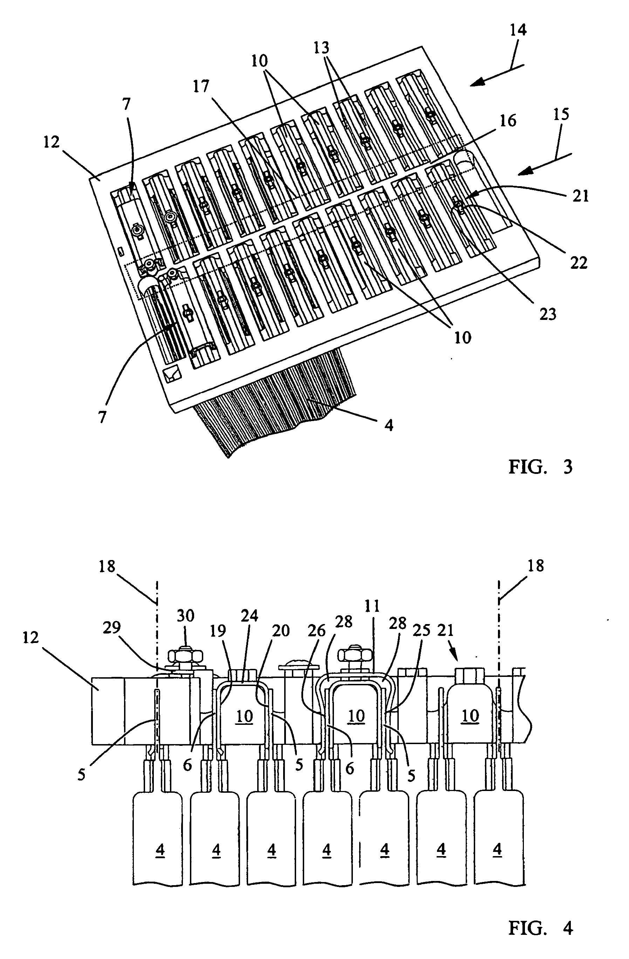

Gemäß der Erfindung ist hierzu eine Kontaktvorrichtung 7 vorgesehen, welche im Wesentlichen aus Distanzhaltern 10 (Fig. 3, Fig. 4) und die Distanzhalter 10 übergreifenden Verbindungsklemmen 11 besteht.

Die Distanzhalter 10 eines Akkublocks bestehen vorteilhaft aus einem elektrisch nicht leitenden Material, insbesondere aus Kunststoff, und sind zu einem Gitterrahmen 12 zusammengefasst, wie er in den Figuren 1 und 3 dargestellt ist. Der Gitterrahmen 12 ist Teil des Deckels 2 des Akkublockes, wobei bei dem Aufsetzen des Gitterrahmens 12 die Anschlussfahnen in Schlitze 13 eintauchen, die jeweils rechts und links eines Distanzhalters 10 im Gitterrahmen ausgebildet sind. Da für eine Reihenschaltung die Anschlussfahnen wechselseitig mit benachbarten Anschlussfahnen verbunden werden, liegen die Distanzhalter 10 der einen Reihe 14 des Gitterrahmens 12 versetzt zu den Distanzhaltern 10 der anderen Reihe 15 des Gitterrahmens 12.

Wie in Fig. 3 strichliert angedeutet, liegt zwischen den Reihen 14 und 15 im Bereich eines Mittelsteges 16 des Gitterrahmens 12 eine Platine 17, welche eine Schutz- und Überwachungsschaltung tragen kann. Die hier dargestellten Akkuflachzellen sind Lithium-Ionen-Zellen, weshalb eine Überwachungsschaltung zwingend vorzusehen ist. Eine derartige Überwachungsschaltung kann auch als Batteriemanagementsystem bezeichnet werden und ist dem Akkublock zugeordnet.

Wie Fig. 4 zeigt, liegen die Anschlussfahnen in zueinander etwa parallelen Ebenen 18, wobei die miteinander zu kontaktierenden Anschlussfahnen 5 und 6 benachbarter Zellen 4 zwischen den einander zugewandten Seitenflächen 19, 20 den Distanzhalter 10 aufnehmen. Der Distanzhalter 10 stellt sicher, dass die Anschlussfahnen 5, 6 nicht durch Querkräfte aus ihren Ebenen 18 gedrängt werden, was unter Umständen zu Schäden im Anschlussbereich der Anschlussfahnen 5, 6 an der Verpackungsfolie der Akkuflachzellen oder an der Verbindung mit dem Anoden- bzw. Kathodenmaterial führen kann.

Jeder Distanzhalter 10 hat auf seiner Oberseite einen Fixierdom 21, der im ersten gezeigten Ausführungsbeispiel aus einer Rippe 22 mit einem zylindrischen Mittelteil 23 gebildet ist. Der Fixierdom 21 durchragt sowohl ein U-förmiges, inneres Kontaktblech 24 als auch eine äußere Verbindungsklammer 11, die mit ihren Schenkeln - im Ausführungsbeispiel flächig - auf den Außenseiten 25, 26 der Anschlussfahnen anliegt. Im Ausführungsbeispiel nach Fig. 4 liegen die Seitenflächen 19 und 20 flächig an dem U-förmigen Kontaktblech 24 an, welches den Korpus des Distanzhalters 10 auf drei Seiten im Wesentlichen vollständig abdeckt. Im Ausführungsbeispiel ist das Kontaktblech 24 elektrisch leitend ausgebildet und ebenso die Verbindungsklammer 11, welche den Distanzhalter 10 und die Anschlussfahnen 5 und 6 übergreift und den Anpressdruck aufbringt, der für eine sichere Kontaktierung der Anschlussfahnen 5 und 6 miteinander unter Berücksichtigung des fließenden hohen Stroms notwendig ist.

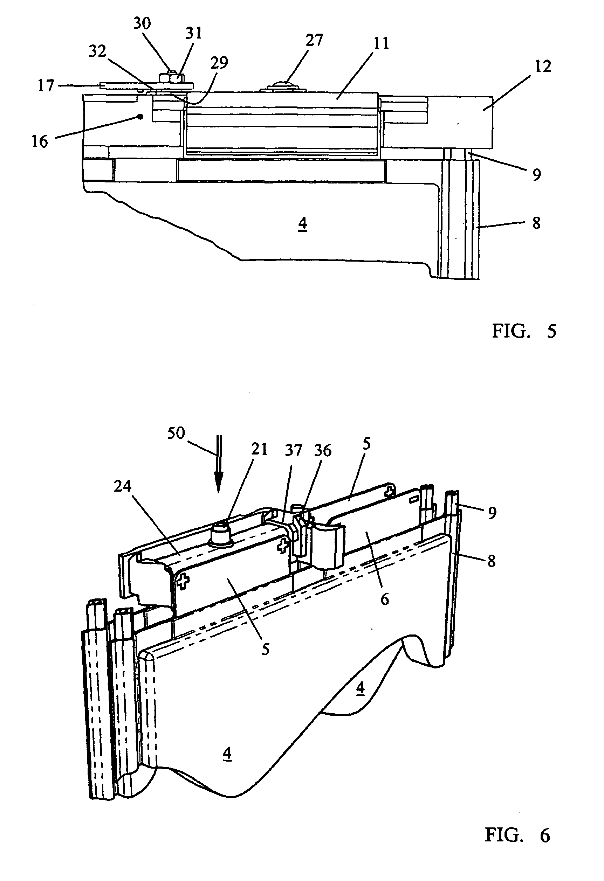

Wie Fig. 5 zeigt, ist die äußere Verbindungsklammer 11 durch eine Sicherungsschraube 27 gesichert, die in den zylindrischen Mittelteil 23 des Fixierdoms 21 eingedreht ist. In Fig. 3 ist links eine derartige montierte Sicherungsschraube dargestellt.

Die Verbindungsklammer 11 hat - wie Fig. 4 zeigt - eine U-förmige Gestalt, wobei der Steg breiter als die Öffnungsweite des offenen Endes der Verbindungsklammer 11 ist. Dadurch ergeben sich Leerräume 28, die zum Eingriff von Montagewerkzeug genutzt werden können. So kann z. B. ein Montagewerkzeug in die Leerräume 28 eingreifen, die Verbindungsklammer 11 aufspreizen, um diese im Wesentlichen kraftfrei über die Anschlussfahnen 5 und 6 aufzuschieben.

Wie Fig. 5 zeigt, weisen die Verbindungsklammern 11 auf Höhe ihres Mittelsteges einen Fortsatz in Form einer Zunge 29 auf, welche eine Platine 17 untergreift, die - vgl. Fig. 3 - im Bereich des Mittelsteges 16 des Gitterrahmens 12 auf diesem festgelegt ist. Jede Zunge 29 trägt einen stehenden Dorn 30, der eine Öffnung in der Platine 17 durchragt. Es kann vorteilhaft sein, auf den Dorn 30 eine Befestigungsmutter 31 aufzuschrauben, um so eine elektrische Kontaktierung der Verbindungsklammer 11 mit der Schaltung der Platine 17 zu gewährleisten.

Die Platine 17 trägt auf ihrer den Zungen 29 zugewandten Flachseite ein oder mehrere Thermoelemente 32, welche ebenfalls elektrisch mit der Schaltung auf der Platine 17 verbunden sind. Das Thermoelement 32 ist so angeordnet, dass bei Befestigung der Platine 17 auf dem Gitterrahmen 12 jedes Thermoelement 32 auf der Zunge 29 zur wärmeübertragenden Anlage kommt. Durch die auf den Dorn 30 aufgeschraubte Mutter 31 kann eine präzise Auflage des Thermoelementes 32 auf der Zunge 29 der Verbindungsklammer 11 unterstützt werden.

Ein besonderer Vorteil dieses Aufbaus besteht darin, dass nach Einsetzen der Akkuflachzellen 4 in das Gehäuse des Akkublocks alle Arbeiten zur Verbindung der Anschlussfahnen von oben (Pfeil 50) durchgeführt werden können. Der mit den U-Kontaktblechen 24 vorbestückte Gitterrahmen 12 wird von oben auf die Zellanordnung aufgesetzt, wobei die Anschlussfahnen 5 und 6 jeweils in die Schlitze 13 einragen. Ist der Gitterrahmen 12 aufgesetzt, liegen die Anschlussfahnen 5 und 6 jeweils an den Schenkeln des U-förmigen Kontaktbleches 24 an. Zur festen Kontaktierung müssen nur noch die Verbindungsklammern 11 von oben (Pfeil 50) aufgesetzt werden; durch Anordnen der Platine 17 mit einer Zellüberwachungsschaltung wird zugleich das Potenzial jeder Kontaktvorrichtung 7 über den in die Platine einragenden Dorn 30 abgegriffen und im Rahmen der Zellüberwachungsschaltung ausgewertet. Die auf der Unterseite der Platine 17 vormontierten Thermoelemente 32 sind für jede Verbindungsklammer 11 vorgesehen, so dass nicht nur das Potenzial jeder Kontaktvorrichtung 7 abgegriffen werden kann, sondern auch die Temperatur der Kontaktvorrichtung 7, die ebenfalls eine Aussage über die Belastung der Akkuflachzellen 4 gibt.

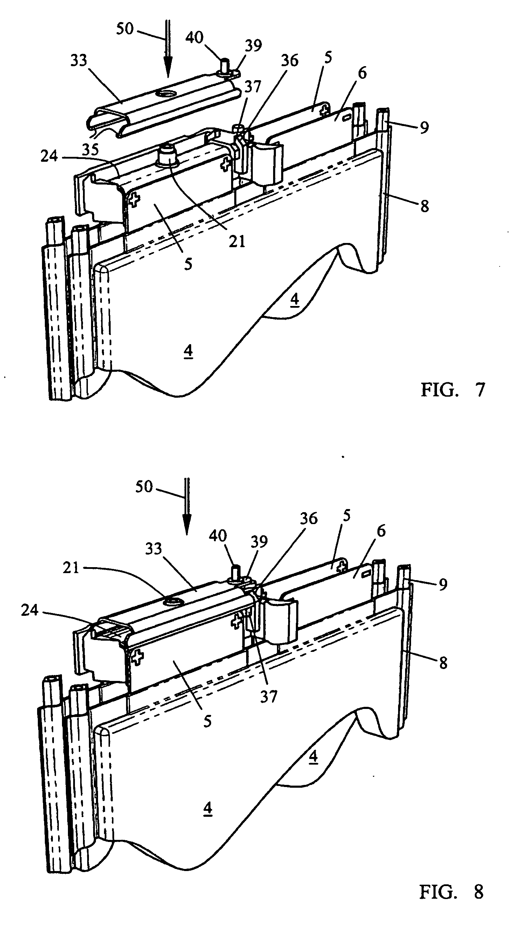

In dem weiteren Ausführungsbeispiel nach den Figuren 6 bis 19 ist dargestellt, wie eine Kontaktierung mit nur einer Montagerichtung von oben (Pfeil 50) ausgeführt sein kann. Im Unterschied zum Ausführungsbeispiel nach den Figuren 1 bis 5 ist im Ausführungsbeispiel nach den Figuren 6 bis 19 die Verbindungsklammer 11 zweiteilig ausgeführt und besteht aus einer kleineren, inneren Federklammer 33 (Fig. 7) und einer äußeren, größeren Federklammer 34. Die innere Federklammer 33 ist profiliert ausgeführt mit nach innen abgewinkelten Längsrändern 35, die die freien Schenkelenden der im Schnitt U-förmigen Federklammer 33 bilden.

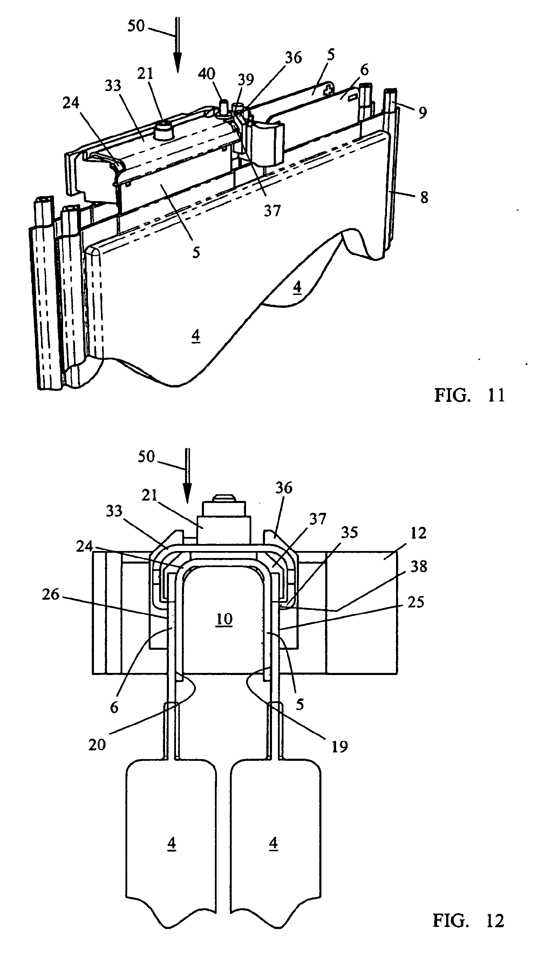

Wie im Ausführungsbeispiel nach Figur 4 gezeigt, können die Federklammern 33, 34 im Querschnitt auch so geformt sein, dass ein Werkzeug zum Spreizen der Federklammern eingeführt werden kann. Hierzu sind zweckmäßig im Eckbereich zwischen dem Steg und den Schenkeln Leerräume 28 (Fig. 11) vorgesehen. Rampen zum Aufspreizen der Klammern können dann entfallen.

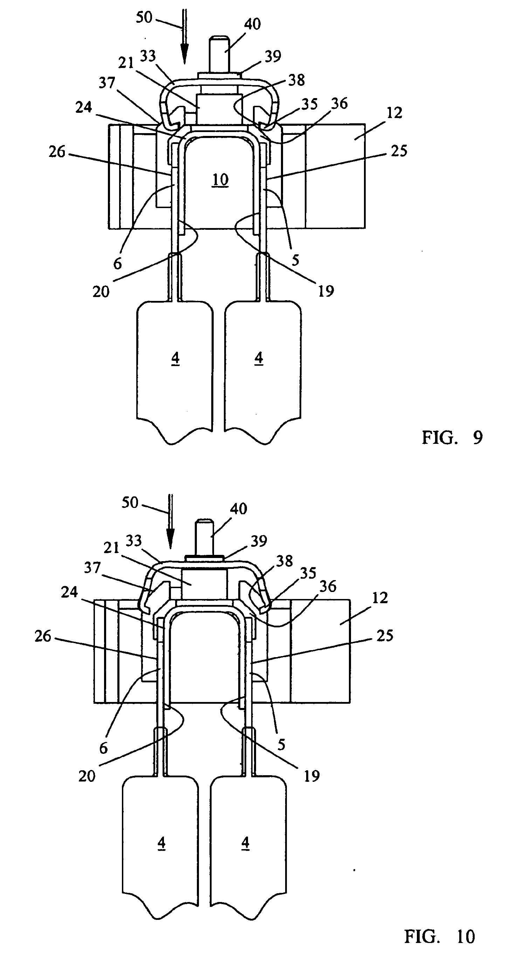

Die Distanzhalter 10 sind an beiden Enden mit Rampen 36 und 37 ausgeführt, wobei die innere Rampe 37 der kleineren Federklammer 33 und die größere, äußere Rampe 36 der größeren, äußeren Federklammer 34 zugeordnet ist. An beiden Längsenden des Distanzhalters 10 sind diese Rampen ausgebildet, wobei beim Aufsetzen der kleineren Federklammer 33 - geführt durch den zylindrischen Fixierdom 21 - die Längsränder 35 auf den Rampen 37 aufsetzen - Fig. 9 -, wobei beim weiteren Aufdrücken der Federklammer 33 auf den Distanzhalter 10 die Rampe 37 ein Aufspreizen der Schenkel der Federklammer 33 bewirkt, wie in Fig. 10 dargestellt. Allein durch Aufdrücken in Pfeilrichtung 50 ist somit eine Montage der Federklammer 33 möglich, wobei nach Überwindung der Rampe 37 - vgl. Figuren 11 und 12 - die Federklammer 33 die Rampe untergreift und damit formschlüssig am Distanzhalter 10 gesichert ist. Dabei liegen die Stirnseiten 38 der Längsränder 35 auf den Außenseiten 25 und 26 der Anschlussfahnen 5 und 6 etwa linienförmig an, wodurch eine hohe Krafteinleitung und damit eine gute Kontaktierung über die Länge des Längsrandes 35 hergestellt wird.

Die innere Federklammer 33 weist einen Fortsatz in Form einer Zunge 39 auf, die einen aufrechten Dorn 40 trägt. Die Federklammer 33 und der Dorn 40 bestehen aus elektrisch leitendem Material.

Die Zunge ist dem Mittelsteg 16 des Gitterrahmens 12 zugewandt und greift mit einem Dorn 40 in eine Platine 17 ein, um eine elektrische Verbindung der Kontaktvorrichtung 7 mit der Zellüberwachungsschaltung auf der Platine 17 herzustellen.

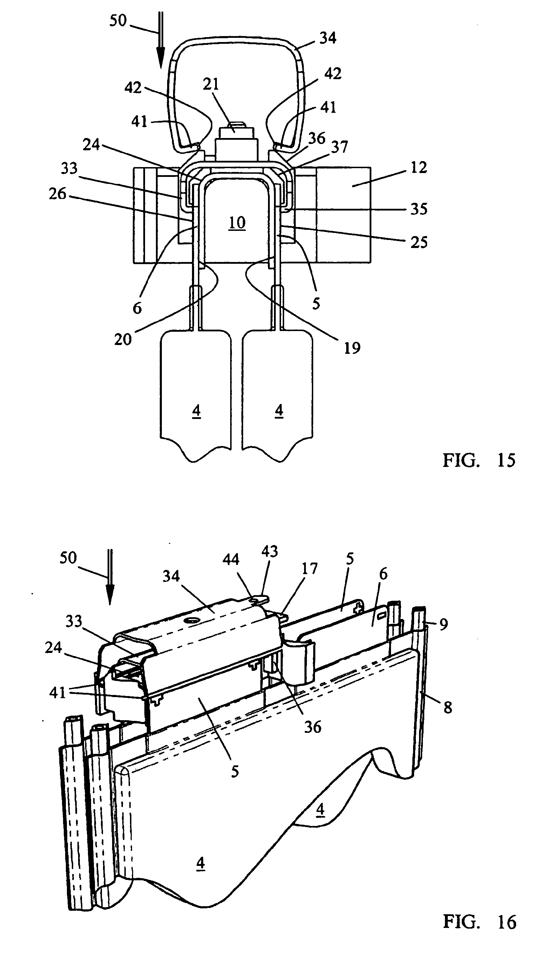

Die äußere Federklammer 34 der Verbindungsklammer übergreift die innere Federklammer 33 und wirkt beim Aufdrücken in Pfeilrichtung 50 mit der äußeren Rampe 36 zusammen, wie die Figuren 15, 17 und 19 zeigen.

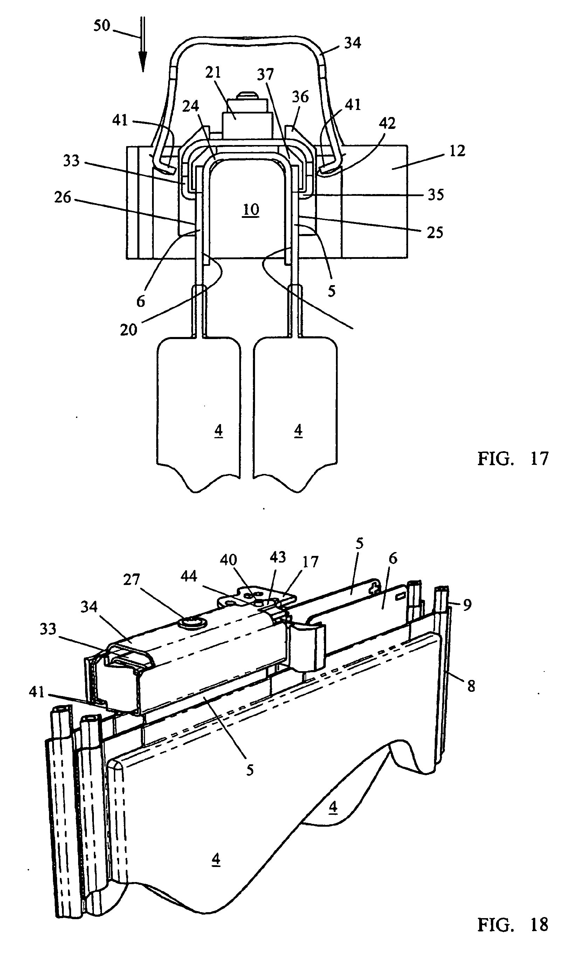

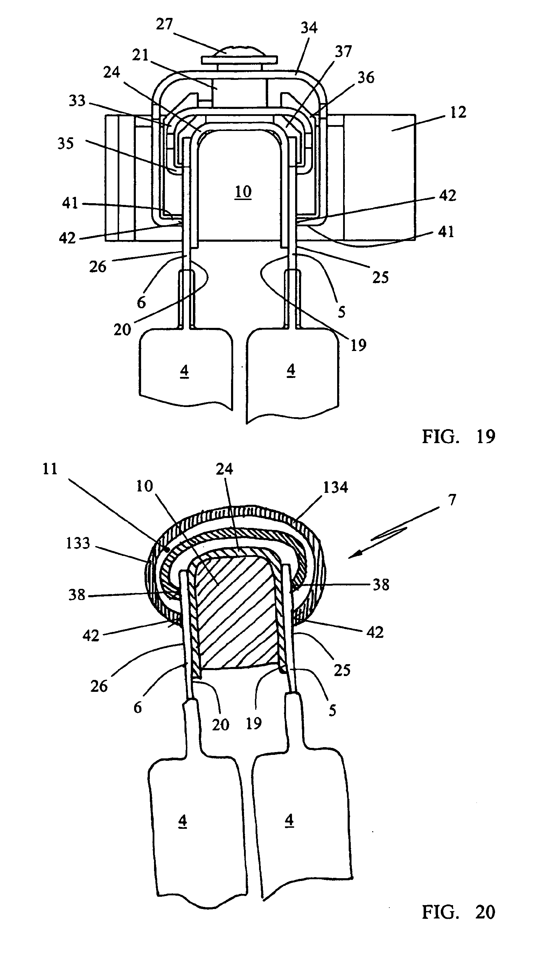

Auch die äußere Federklammer 34 hat abgewinkelte Schenkelenden, so dass ein innenliegender Längsrand 41 ausgebildet ist. Dieser innenliegende Längsrand 41 wirkt beim Aufsetzen auf den Distanzhalter 10 an beiden Enden mit Rampen 37 zusammen, spreizt die äußere Federklammer 34 auf - Fig. 17 -, damit diese - an der Rampe 37 geführt - ohne Kontakt zu den Anschlussfahnen 5 und 6 in ihre Endstellung - Fig. 19 - geschoben werden kann. In der Endstellung untergreift die äußere Federklammer 34 die Rampe 37 und legt sich mit den Stirnseiten 42 der Längsränder 41 über die Länge des Distanzhalters 10 an die Anschlussfahnen 5 und 6 an. Dabei wird - etwa linienartig - durch die Federkraft der äußeren Federklammer ein hoher Druck auf die Außenseiten der Anschlussfahnen aufgebracht und gewährleistet - über die gesamte Länge der Anschlussfahne - eine gute elektrische Kontaktierung.

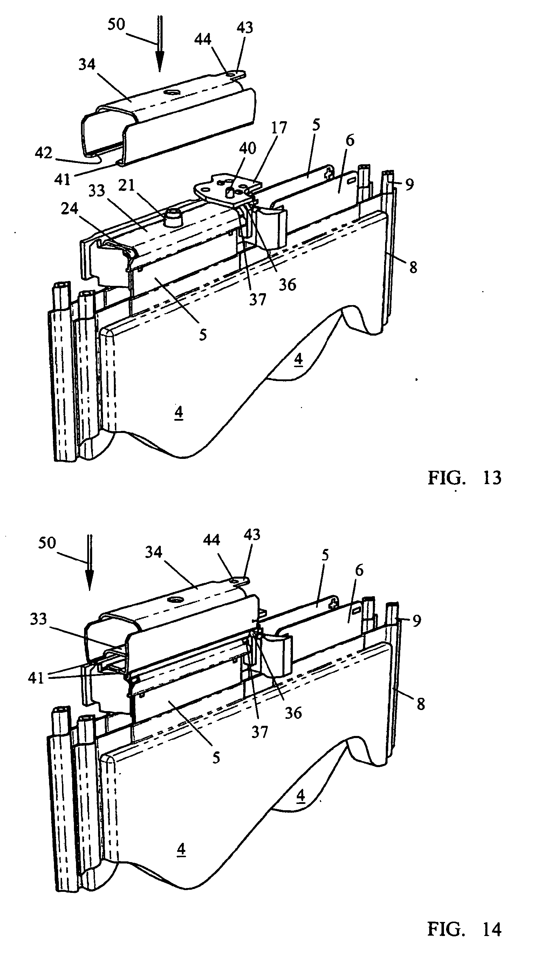

Wie in den Figuren 13 bis 16 zu sehen, weist auch die äußere Federklammer 34 eine dem Mittelsteg 16 des Gitterrahmens 12 zugewandt liegende Zunge 43 auf, in der eine Aufnahme 44 ausgebildet ist. Beim Aufdrücken greift der Dorn 40 der inneren Federklammer 33 in die Aufnahme 44 ein, so dass auch die äußere Federklammer 34 - ebenso wie die innere Federklammer 33 - elektrisch mit der Platine 17 kontaktiert ist.

Abschließend werden die Elemente der Kontaktvorrichtung 7 wieder durch eine Sicherungsschraube 27 gesichert, die in den Fixierdom 21 des Distanzhalters 10 eingeschraubt ist (Fig. 18).

Die Kontaktfahnen einer Akkuflachzelle 4 bestehen an einem Pol aus Reinaluminium und am anderen Pol aus verzinktem Kupfer. Nach einer Weiterbildung der Erfindung ist vorgesehen, das U-förmige Kontaktblech aus Reinaluminiumblech zu fertigen, das an seinem einen Schenkel, an dem die verzinkte Kontaktfahne anliegt, ebenfalls verzinkt wird. Entsprechend wird die Verbindungsklammer, die bevorzugt aus Federstahl gefertigt ist, an der verzinkten Kontaktfahne ebenfalls verzinkt und im Bereich der Anlage an der anderen Kontaktfahne mit Alu beschichtet oder auch vergoldet.

Um eine hohe Klemmkraft aufzubauen ist entsprechend Fig. 20 vorgesehen, den Querschnitt der Verbindungsklammer 11 bzw. der Federklammern 133, 134 so zu gestalten, dass eine Maximierung der Klemmkräfte möglich ist. Vorteilhaft ist eine etwa kreisförmige bis ovale bzw. elliptische Querschnittsform gewählt, wie in Figur 20 dargestellt. Auch diese Federklammern 133, 134 liegen mit ihren schmalen Stirnseiten 38 bzw. 42 auf der Außenseite 25 bzw. 26 der Anschlussfahnen 5 bzw. 6 an und leiten eine hohe Klemmkraft ein, die eine gute elektrische Kontaktierung gewährleistet.

## Patentansprüche

1. Kontaktvorrichtung zum elektrischen Verbinden der Anschlussfahnen (5, 6) nebeneinander liegender Akkuzellen (4) in einem Akkublock,
**dadurch gekennzeichnet, dass** die Seitenfläche (19, 20) der Anschlussfahne (5, 6) der einen Zelle (4) der zugewandten Seitenfläche (19, 20) der Anschlussfahne (6, 5) der benachbarten Zelle (4) mit Abstand gegenüberliegt, dass zwischen den einander zugewandten Seitenflächen (19, 20) ein druckstabiler Distanzhalter (10) eingesetzt ist, und dass die Anschlussfahnen (5, 6) und der Distanzhalter (10) von einer Verbindungsklammer (11) übergriffen sind, die auf den einander abgewandten Außenseiten (25, 26) der Anschlussfahnen (5, 6) anliegt und eine elektrische Verbindung zwischen den Anschlussfahnen (5, 6) über den Distanzhalter (10) und/oder die Verbindungsklammer (11) hergestellt ist.

2. Kontaktvorrichtung nach Anspruch 1,
**dadurch gekennzeichnet, dass** der Distanzhalter (10) aus einem Kunststoff besteht und ein Kontaktblech (24) trägt, welches auf den einander zugewandten Seitenflächen (19, 20) der Anschlussfahnen (5, 6) anliegt.

3. Kontaktvorrichtung nach Anspruch 1 oder 2,
**dadurch gekennzeichnet, dass** der Distanzhalter (10) Teil eines gemeinsamen Gitterrahmens (12) ist, der eine Vielzahl von Distanzhaltern (10) umfasst, die zwischen die Freiräume der Anschlussfahnen (5, 6) einer Zellanordnung aus mehreren Akkuzellen eines Akkublocks eingreift.

4. Kontaktvorrichtung nach einem der Ansprüche 1 bis 3,
**dadurch gekennzeichnet, dass** der Distanzhalter (10) einen Fixierdom (21) aufweist, der das Kontaktblech (24) und/oder die Verbindungsklammer (11) durchragt.

5. Kontaktvorrichtung nach Anspruch 4,
**dadurch gekennzeichnet, dass** der Fixierdom (21) zur Aufnahme einer Sicherungsschraube (27) ausgebildet ist.

6. Kontaktvorrichtung nach einem der Ansprüche 1 bis 5,
**dadurch gekennzeichnet, dass** zwischen den Anschlussfahnen (5, 6) einer Zelle (4) eine Platine (17) für eine Zellüberwachungsschaltung angeordnet ist und das Kontaktblech (24) und/oder die Verbindungsklemme (11) die Platine (17) untergreift und elektrisch mit ihr kontaktiert ist.

7. Kontaktvorrichtung nach Anspruch 6,
**dadurch gekennzeichnet, dass** die Kontaktierung durch federnde Anlage eines Kontaktelementes ausgebildet ist.

8. Kontaktvorrichtung nach Anspruch 6 oder 7,
**dadurch gekennzeichnet, dass** zwischen dem Kontaktblech (24) und/oder der Verbindungsklammer (11) und der Platine (17) ein Thermoelement (32) angeordnet ist.

9. Kontaktvorrichtung nach Anspruch 8,
**dadurch gekennzeichnet, dass** an einer Vielzahl von Kontaktvorrichtungen (7) ein Thermoelement (32) anliegt und die Thermoelemente (32) auf der Platine (17) gehalten sind.

10. Kontaktvorrichtung nach einem der Ansprüche 6 bis 9,
**dadurch gekennzeichnet, dass** die Platine (17) am Gitterrahmen (12) der Distanzhalter (10) befestigt ist.

11. Kontaktvorrichtung nach einem der Ansprüche 1 bis 10,
**dadurch gekennzeichnet, dass** die Verbindungsklammer (11) zweiteilig ausgebildet ist und aus einer kleineren, inneren Federklammer (33) und einer größeren, äußeren Federklammer (34) besteht.

12. Kontaktvorrichtung nach Anspruch 11,
**dadurch gekennzeichnet, dass** die innere Federklammer (33) und die äußere Federklammer (34) jeweils mit einer schmalen Auflagefläche auf der Außenseite (25, 26) der Anschlussfahnen (5, 6) aufliegt.

13. Kontaktvorrichtung nach einem der Ansprüche 1 bis 12,
**dadurch gekennzeichnet, dass** alle Systemelemente der Kontaktvorrichtung (7) eine gleiche Montagerichtung aufweisen.

14. Kontaktvorrichtung nach einem der Ansprüche 1 bis 13,
**dadurch gekennzeichnet, dass** das Kontaktblech (24) und/oder die Verbindungsklammer (11) an den Anlageflächen materialunterschiedlich ausgebildet, insbesondere materialunterschiedlich beschichtet ist.

15. Kontaktvorrichtung nach einem der Ansprüche 1 bis 14,
**dadurch gekennzeichnet, dass** die Verbindungsklammer (11) oder die eine Verbindungsklammer (11) bildenden Federklammern (33, 34) eine im Querschnitt kreisförmige oder elliptische Gestalt aufweisen.

## Claims

1. A contact device for electrically connecting the connecting lugs (5, 6) of adjacent battery cells (4) in a battery block,
**characterised in that** the lateral face (19, 20) of the connecting lug (5, 6) of the one cell (4) lies opposite the facing lateral face (19, 20) of the connecting lug (6, 5) of the adjacent cell (4), spaced apart therefrom, **in that** a pressure-stable spacer (10) is inserted between the facing lateral faces (19, 20), and **in that** the connecting lugs (5, 6) and the spacer (10) are straddled by a connecting clip (11) which lies against the outsides (25, 26) of the connecting lugs (5, 6) which are remote from each other, and an electrical connection between the connecting lugs (5, 6) is produced via the spacer (10) and/or the connecting clip (11).

2. A contact device according to Claim 1,
**characterised in that** the spacer (10) consists of a plastics material and bears a contact plate (24) which lies against the facing lateral faces (19, 20) of the connecting lugs (5, 6).

3. A contact device according to Claim 1 or 2,
**characterised in that** the spacer (10) is part of a common grid frame (12) which comprises a plurality of spacers (10) which engage between the gaps in the connecting lugs (5, 6) of a cell arrangement consisting of a plurality of battery cells of a battery block.

4. A contact device according to one of Claims 1 to 3,
**characterised in that** the spacer (10) has a fixing dome (21) which penetrates through the contact plate (24) and/or the connecting clip (11).

5. A contact device according to Claim 4,
**characterised in that** the fixing dome (21) is configured to receive a securing screw (27).

6. A contact device according to one of Claims 1 to 5,
**characterised in that** a circuit board (17) for a cell-monitoring circuit is arranged between the connecting lugs (5, 6) of a cell (4), and the contact plate (24) and/or the connecting terminal [sic] (11) engages underneath the circuit board (17) and is contacted electrically therewith.

7. A contact device according to Claim 6,
**characterised in that** the contacting is formed by resilient surface contact of a contact element.

8. A contact device according to Claim 6 or 7,
**characterised in that** a thermoelement (32) is arranged between the contact plate (24) and/or the connecting clip (11) and the circuit board (17).

9. A contact device according to Claim 8,
**characterised in that** a thermoelement (32) lies against a plurality of contact devices (7), and the thermoelements (32) are held on the circuit board (17).

10. A contact device according to one of Claims 6 to 9,
**characterised in that** the circuit board (17) is fastened to the grid frame (12) of the spacer (10).

11. A contact device according to one of Claims 1 to 10,
**characterised in that** the connecting clip (11) is formed in two parts and consists of a smaller, inner spring clamp (33) and a larger, outer spring clamp (34).

12. A contact device according to Claim 11,
**characterised in that** the inner spring clamp (33) and the outer spring clamp (34) lie in each case with a narrow contact surface on the outside (25, 26) of the connecting lugs (5, 6).

13. A contact device according to one of Claims 1 to 12,
**characterised in that** all the system elements of the contact device (7) have one and the same mounting direction.

14. A contact device according to one of Claims 1 to 13,
**characterised in that** the contact plate (24) and/or the connecting clip (11) is formed with different material on the contact surfaces, in particular is coated with different material.

15. A contact device according to one of Claims 1 to 14,
**characterised in that** the connecting clip (11) or the spring clamps (33, 34) forming a connecting clip (11) have a form which is circular or elliptical in cross-section.

## Revendications

1. Dispositif de contact pour la liaison électrique des pattes de connexion (5, 6) des éléments d'accumulateur (4) placés côte à côte dans un bloc d'accumulateur, **caractérisé en ce que** la surface latérale (19, 20) de la patte de contact (5, 6) d'un élément (4) se trouve en face et à une certaine distance de la surface latérale (19, 20), tournée vers elle, de la patte de connexion (6, 5) de l'élément (4) voisin, **en ce qu'**un écarteur (10) stable à la pression est placé entre les surfaces latérales (19, 20) tournées l'une vers l'autre, et **en ce que** les pattes de connexion (5, 6) et l'écarteur (10) sont couverts par une bride de liaison (11) qui est posée sur les côtés extérieurs (25, 26), opposés l'un à l'autre, des pattes de connexion (5, 6), et une liaison électrique est réalisée entre les pattes de connexion (5, 6) par l'intermédiaire de l'écarteur (10) et/ou de la bride de liaison (11).

2. Dispositif de contact selon la revendication 1,
**caractérisé en ce que** l'écarteur (10) est en matière plastique et porte une tôle de contact (24) qui est posée sur les surfaces latérales (19, 20), tournées l'une vers l'autre, des pattes de connexion (5, 6).

3. Dispositif de contact selon la revendication 1 ou 2,
**caractérisé en ce que** l'écarteur (10) fait partie d'une grille commune (12) comprenant une multiplicité d'écarteurs (10) qui pénètrent dans les espaces libres des pattes de connexion (5, 6) d'un dispositif à éléments formé de plusieurs éléments d'accumulateur d'un bloc d'accumulateur.

4. Dispositif de contact selon l'une des revendications 1 à 3,
**caractérisé en ce que** l'écarteur (10) comporte une calotte de fixation ((21) qui traverse la tôle de contact (24) et/ou la bride de liaison (11).

5. Dispositif de contact selon la revendication 4,
**caractérisé en ce que** la calotte de fixation (21) est conçue pour recevoir une vis de blocage (27).

6. Dispositif de contact selon l'une des revendications 1 à 5,
**caractérisé en ce qu'**il est prévu entre les pattes de connexion (5, 6) d'un élément (4) une platine (17) pour un circuit de surveillance d'élément, et la tôle de contact (24) et/ou la bride de liaison (11) passent sous la platine (17) et sont en contact électrique avec celle-ci.

7. Dispositif de contact selon la revendication 6,
**caractérisé en ce que** le contact électrique est formé par l'application élastique d'un élément de contact.

8. Dispositif de contact selon la revendication 6 ou 7,
**caractérisé en ce qu'**un thermocouple (32) est disposé entre la tôle de contact (24) et/ou la bride de liaison (11) et la platine (17).

9. Dispositif de contact selon la revendication 8,
**caractérisé en ce qu'**un thermocouple (32) est appliqué contre une multiplicité de dispositifs de contact (7), et les thermocouples (32) sont fixés sur la platine (17).

10. Dispositif de contact selon l'une des revendications 6 à 9,
**caractérisé en ce que** la platine (17) est fixée à la grille (12) des écarteurs (10).

11. Dispositif de contact selon l'une des revendications 1 à 10,
**caractérisé en ce que** la bride (11) est en deux parties et se compose d'une bride élastique intérieure (33), plus petite, et d'une bride élastique extérieure (34), plus grande.

12. Dispositif de contact selon la revendication 11,
**caractérisé en ce que** la bride élastique intérieure (33) et la bride élastique extérieure (34) sont posées chacune avec une surface d'application étroite sur le côté extérieur (25, 26) des pattes de connexion (5, 6).

13. Dispositif de contact selon l'une des revendications 1 à 12,
**caractérisé en ce que** les éléments de système du dispositif de contact (7) présentent un même sens de montage.

14. Dispositif de contact selon l'une des revendications 1 à 13,
**caractérisé en ce que** la tôle de contact (24) et/ou la bride de liaison (11) sur les surfaces d'application sont formées dans des matériaux différents, et sont en particulier recouvertes de matériaux différents.

15. Dispositif de contact selon l'une des revendications 1 à 14,
**caractérisé en ce que** la bride de liaison (11) ou les brides élastiques (33, 34) qui forment une bride de liaison (11) présentent en section transversale une forme circulaire ou elliptique.
